Europäisches Patentamt

European Patent Office

Office européen des brevets

(19)

(11) Veröffentlichungsnummer: **0 372 300**
**A1**

(12) EUROPÄISCHE PATENTANMELDUNG

(21) Anmeldenummer: 89121630.1

(22) Anmeldetag: 23.11.89

(51) Int. Cl.⁵: **F22B 37/14, F22B 37/10**

(30) Priorität: 07.12.88 DE 3841122

(43) Veröffentlichungstag der Anmeldung:
13.06.90 Patentblatt 90/24

(84) Benannte Vertragsstaaten:
DE GB IT NL SE

(71) Anmelder: **L. & C. Steinmüller GmbH**
**Postfach 10 08 55/10 08 65 Fabrikstrasse 1**
**D-5270 Gummersbach 1(DE)**

(72) Erfinder: **Keintzel, Günter, Dr.**
**Fichtestrasse 11**
**D-5250 Engelskirchen(DE)**
Erfinder: **Premel, Ulrich**
**Lebrechtstrasse 20**
**D-5270 Gummersbach(DE)**

(74) Vertreter: **Carstens, Wilhelm, Dipl.-Phys.**
**L. & C. Steinmüller GmbH Patentabteilung**
**Postfach 10 08 55/10 08 65**
**D-5270 Gummersbach 1(DE)**

(54) Anordnung zum Schutz von Rohrabschnitten von in einem Gaskanal angeordneten schottenartigen Heizflächen gegen Verschleiss durch mit Feststoffteilchen beladenen Gasen.

(57) Bei Anordnung zum Schutz von Rohrabschnitten von in einem Gaskanal (1) angeordneten schottenartigen Heizflächen (6) gegen Verschleiß durch mit Feststoffteilchen beladenen Gasen ist vorgeschlagen, daß das Verschleißschutzelement (10) längs seiner Erstreckungsrichtung ohne vorherige Lösung einer festen Verbindung zu den zu schützenden Rohrabschnitten (8; 9) aus dem Gaskanal (1) herausziehbar ist. Das Verschleißschutzelement kann in Form eines drehbaren Deflektors (10) die Endbögen von Rohren oder in Form eines Vollprofils geradlinige Rohrabschnitte schützen.

Fig. 1.

# Anordnung zum Schutz von Rohrabschnitten von in einem Gaskanal angeordneten schottenartigen Heizflächen gegen Verschleiß durch mit Feststoffteilchen beladenen Gasen

Die Erfindung betrifft eine Anordnung gemäß Oberbegriff des Anspruches 1.

Aus der DE-Z. "Braunkohle" Heft 3, März 1961, Aufsatz "Feuerungstechnik und Wärmewirtschaft/Verschleißprobleme bei Staubkesseln", S. 81 - 94, insbesondere S. 88-89 sind Anordnungen zur Verhinderung von Verschleißschäden an Nachschaltheizflächen bekannt.

Verschleißschäden treten zum einen an den äußeren Bögen von Schlagenrohren bzw. Mäanderbändern auf, die dicht oder weniger dicht den Kanalwänden benachbart sind. Die sich in diesen Bereichen einstellende Randgängigkeit der staubbeladenen Gase führt aufgrund des unterschiedlichen Druckverlustes über die gesamt angeströmte Heizfläche in diesem Bereich zu einer erhöhten Geschwindigkeit. Dies führt zu einem höheren Verschleiß, da die Geschwindigkeit mit der dritten bis vierten Potenz in die Verschleißrate eingeht, während die Staubbeladung nur linear eingeht. Die aus Abb. 14 auf S. 89 der DE-Z. bekannten Deflektoren schützen zum einen direkt die Rohrbögen, geben aber noch einen weiteren Schutz, in dem sie die Feststoffteilchen auf die als Mauerwerk ausgebildete Kanalwand ableiten.

Bevorzugt werden die Deflektoren an den Rohren befestigt.

Längliche Rohrabschnitte der Heizflächen werden gemäß Abb. 14 untere Hälfte durch Winkeleisen, Flacheisen und Rohrhalbschalen geschützt, die an den geraden Rohrabschnitten selbst befestigt sind.

Sowohl bei den sich parallel zur Kanalwand erstreckenden und den äußeren Endbögen zugeordneten Deflektoren als auch bei den die einzelnen Rohre schützenden Profilleisten muß zum Austausch die Verbindung zu dem zu schützenden Rohrabschnitt im Kanal gelöst und nach Zuordnung eines neuen Verschleißschutzelementes wieder aufgebaut werden.

Es ist die Aufgabe der vorliegenden Erfindung eine Anordnung der im Oberbegriff des Anspruches 1 genannten Art anzugeben, bei der der Austausch der Verschleißschutzelemente erleichtert wird.

Diese Aufgabe wird dadurch gelöst, daß das Verschleißschutzelement längs seiner Erstreckungsrichtung ohne vorherige Lösung einer festen Verbindung zu den zu schützenden Rohrabschnitten aus dem Gaskanal herausziehbar und einschiebbar ist.

Auf diese Art und Weise kann ein nicht mehr ausreichend verleißschutzgewährendes Verschleißschutzelement leicht ersetzt werden.

Zum Schutz von Endbögen einer Mäanderheizfläche, die einer aus Rohren aufgebauten Kanalwand, insbesondere einer Rohr-Steg-Rohr-Wand benachbart sind, geht die Erfindung von einer Anordnung gemäß Oberbegriff des Anspruches 2 aus. Erfindungsgemäß ist bei dieser Anordnung vorgesehen, daß bei einer aus Rohren aufgebauten Wandheizfläche des Gaskanals der Deflektor aus einem sich quer zur Wandheizfläche erstreckenden länglichen Träger mit im wesentlichen in diametraler Stellung angeordneten, .1. vorzugsweise angeschweißten Flossen besteht, und der Deflektor durch einen entsprechend geformten Schlitz in einer Gaskanalwand in den Gaskanal einführbar und dort in eine Betriebstellung verschwenkbar ist, in der die Gasströmung von der Gaskanalwand fortgelenkt und auf weniger geschwächte Teile der Heizflächenrohre gelenkt wird, d.h. auf die Endbereiche der Rohrbögen bzw. auf gerade Rohrabschnitte, wobei vorzugsweise ein Aufprallwinkel von nahe 90° erreicht wird. Es kommt im wesentlichen darauf an, daß die stärker gefährdeten Bodenbereiche der Bögen weniger bzw. überhaupt nicht mehr mit Staub beaufschlagt werden.

Vorzugsweise ist der Träger als gekühltes Rohr ausgebildet, da bei höheren Gastemperaturen die mechanische Festigkeit nicht mehr gegeben ist, und da häufig feststoffbeladene Gase auch korrosive Bestandteile aufweisen; z.B. ist ohne Kühlung die Hochtemperaturkorrosion an diesen Rohren relativ hoch, z.B. die $H_2S$-Korrosion.

Es ist zwar möglich, die Flossen mit geraden, freien Kanten auszubilden, um die Randgängigkeit jedoch weitgehendst auszuschließen, ist es von Vorteil, wenn die Flossen an ihren freien Kanten mit Ausnehmungen versehen sind, die die zu schützenden Rohre der Schottenheizfläche bzw. der Wandheizfläche übergreifen.

Zum Schutz der geraden Rohrabschnitte geht die Erfindung von einer Anordnung gemäß Oberbegriff des Anspruches 5 aus.

Erfindungsgemäß ist dabei vorgesehen, daß mindestens ein Verschleißschutzelement mit Abstand von dem zu schützenden Rohrabschnitt und ohne feste Verbindung zu diesem angeordnet ist. Der Abstand des Verschleißschutzelementes von dem zu schützenden Rohrabschnitt sollte kleiner oder gleich dem Abstand der Rohre in der Heizfläche sein.

Quer zur Strömungsrichtung der Gasströmung sollte die Abmessung des Verschleißschutzelementes gleich oder größer dem Durchmesser der zu schützenden Rohre sein.

Vorzugsweise sollte das Verschleißschutzelement als Vollprofil ausgebildet sein, so daß es nach einem gewissen Abnutzungsgrad nach Drehung von außen weiterhin seine Verschleißschutzfunktion ausüben kann, ehe es in seiner Erstreckungsrichtung herausgezogen und gewechselt werden muß.

Es ist zweckmäßig, wenn das Verschleißschutzelement einen kreisrunden, einen dreieckförmigen oder einen quadratischen Querschnitt aufweist. Die Vorteile der einzelnen Querschnittsformen werden in der Figurenbeschreibung näher erläutert.

Die Erfindung soll nun anhand der beigefügten Figuren näher erläutert werden.

Es zeigen:

FIG. 1 einen Teilschnitt durch einen Gaskanal mit einem Endbogen einer Schlangenheizfläche, einem Randgängigkeitsdeflektor und einem Verschleißschutzelement zum Verschleißschutz für gerade Rohrabschnitte längs der Linie I-I in FIG. 2,

FIG. 2 einen Schnitt längs der Linie II-II in FIG. 1,

FIG. 3 einen Teilschnitt durch einen weiteren Gaskanal zur Darstellung der Zuordnung von Vollprofilverschleißschutzelementen zu geraden Rohrabschnitten einer Schottenheizfläche,

FIG. 4 einen Schnitt längs der Linie IV-IV durch FIG. 3, mit aus der Kanalwand herausragenden Verschleißschutzelementen,

FIG. 5 eine Prinzipskizze zur Darstellung der Dimensions-und Abstandserfordernisse,

FIG. 6 einen Schnitt durch einen weiteren Gaskanal mit vertikaler Gasströmung im Gegensatz zur horizontalen Gasströmung gemäß FIG. 3

FIG. 7 bis 9 Vollprofilverschleißschutzelemente unterschiedlicher Querkonfiguration in Zuordnung zu dem zu schützenden Rohrabschnitt und

FIG. 10 eine Ausführungsform mit sich nur im Kanal erstreckenden Verschleißschutzelementen.

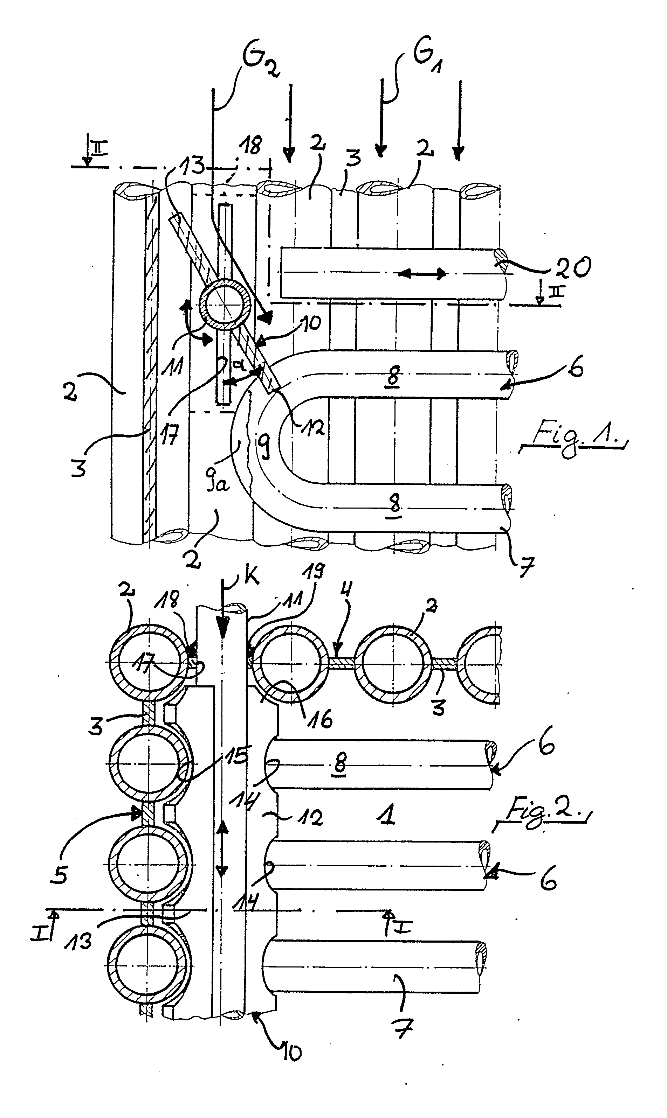

Der in der FIG. 1 dargestellte und von einem staubbeladenen Gas G durchströmte Gaskanal 1 weist im Rohr 2 - Steg 3 - Rohr 2 ausgeführte Kanalwände auf, von denen gemäß FIG. 1 und 2 zwei eine Kanalecke bildende Wände 4 und 5 dargestellt sind.

In dem Gaskanal 1 sind Heizflächen 6 angeordnet, die aus Schlangenrohren 7 aufgebaut sind. Die Schlangenrohre bestehen aus geraden Rohrabschnitten 8, die jeweils durch einen Endbogen 9 miteinander verbunden sind. Die Endbögen erstrecken sich mit Abstand von der Kanalwand 5. Da sich die Gasgeschwindigkeit infolge der Randgängigkeit erhöht, sind die Endbögen 9 einer besonders hohen Verschleißrate ausgesetzt.

Um diesen Verschleiß zu verringern, erstreckt sich parallel zur Wand 5 ein Verschleißstutzdeflektor 10. Dieser besteht aus einem mit einem Kühlmittel K gekühlten Rohr 11 und daran diametral angeschweißten Flossen 12 und 13.

In den freien Kanten der Flossen 12 und 13 sind an die Lage der Rohre 2 und 7 und deren geometrie angepaßte Ausnehmungen 14 und 15 in Halbmondform ausgebildet. Die Ecken der Flossen 12 und 13 sind mit Abrundungen 16 versehen.

In der Kanalwand 4 ist ein an den Querschnitt des Rohres 11 und an die Geometrie der Flossen 12 und 13 angepaßter Schlitz 17 ausgebildet, durch den der Verschleißdeflektor zwischen zwei Rohre der Kanalwandung einschiebbar ist. Beim Einschieben erstrecken sich die Flossen 12 und 13 parallel zur Rohrwand 5. Nach dem Einführen des Verschleißschutzdeflektors wird dieser um den Winkel aus der vertikalen verschwenkt, so daß Ausnehmungen 14 und 15 die Schlangenrohre 7 bzw. die Rohre 2 der Wand 5 übergreifen.

In dieser Winkelstellung wird der Gasteilstrom G 2 umgelenkt, werden die von den Flossen aufgefangenen Staubteilchen von dem am stärksten gefährdeten Bereich 9a der Endbögen in weniger gefährdete Bereiche in der Nähe der geraden Rohrabschnitte 8 abgeleitet. Die den Flossen 12 und 13 zuzuordnenden Abschnitte des Schlitzes werden von außen durch eine Deckplatte 18 abgedeckt und die Winkellage durch eine Verschweißung 19 gesichert. Die Bewegungsmöglichkeiten des Deflektors 10 sind in FIG. 1 und 2 durch die Doppelpfeile dargestellt.

Der Verschleißschutzdeflektor kann an seinem in der FIG. 2 unteren Ende durch einen Rohrabschnitt in einer entsprechenden Öffnung der gegenüberliegenden Wand gehalten sein oder es kann auf der Innenfläche eine Lagerbuchse vorgesehen sein. Das Kühlmittel K würde dann an einem Ende ein- und abgeleitet werden.

In der FIG. 1 ist der obere gerade Rohrabschnitt 8 durch ein sich parallel zu ihm erstreckendes Verschleißschutzelement 20 von kreisförmigem Querschnitt geschützt, das in Richtung des Doppelpfeils einschiebbar und herausziehbar ist.

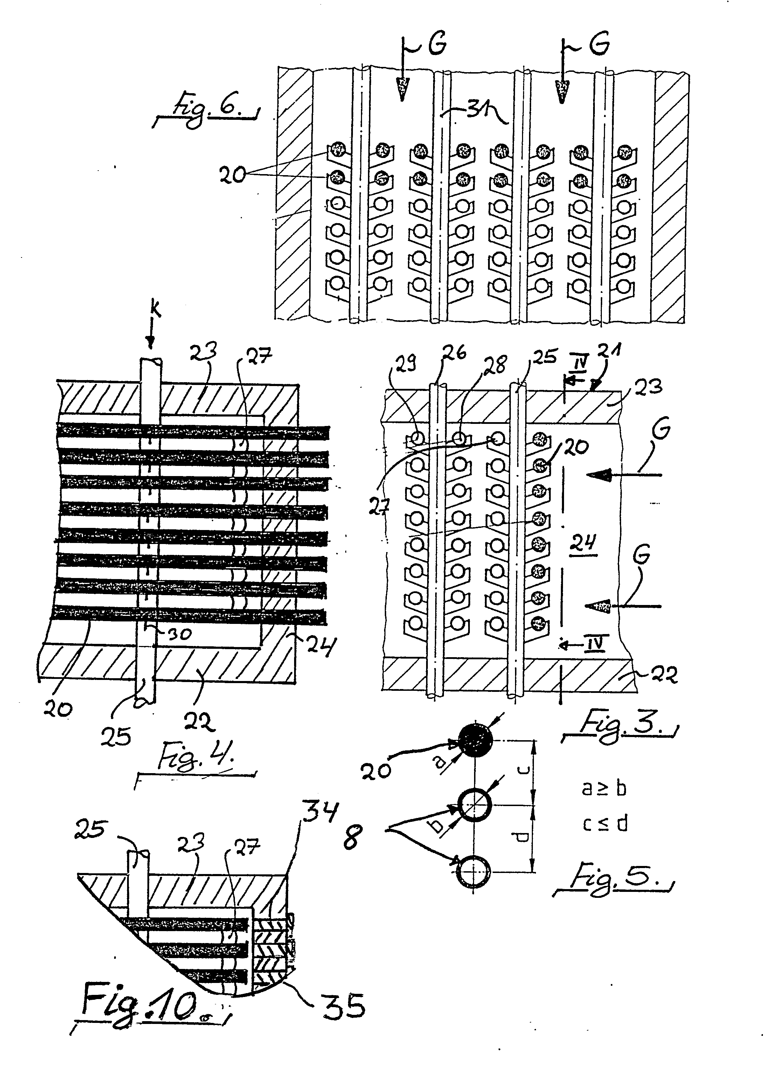

Aus der FIG. 5 sind die einzuhaltenden Beziehungen zwischen dem Durchmesser a des Verschleißschutzelementes 20 dem Durchmesser b der Rohre 7, dem Abstand c des Verschleißschutzelementes 20 vom oberen Rohr 8 und dem Abstand d zweier Rohre 8 ablesbar.

In der FIG. 3 sind in einem Gaskanal 21 mit einer Bodenwand 22, einer Deckwand 23 und Seitenwänden 24 an mit einem Kühlmittel K gekühlten Tragrohren 25 und 26 Heizflächen 27, 28 und 29 mittels Tragflossen bzw. Tragarmen 30 gehalten. Den geraden Rohrabschnitten 8 der Heizfläche 27 sind Verschleißschutzelemente 20 zugeordnet, die auf Tragarmen 30 der Tragrohre 25 derart angeordnet sind, daß sie, wie die FIG. 4 zeigt, durch die Seitenwand 24 von außen gedreht bzw. herausgezogen und gewechselt werden können.

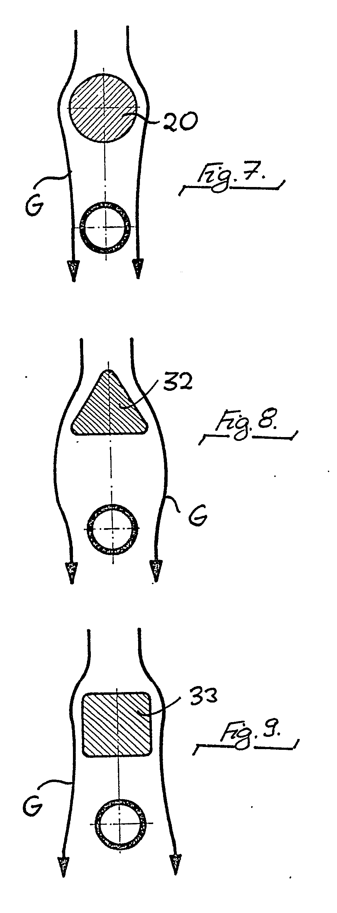

Die Ausführungsform gemäß FIG. 6 unterscheidet sich von der Ausführungsform gemäß FIG. 3 nur dadurch, daß die Anströmung von oben erfolgt, sich die Tragrohre 31 parallel zur Gasströmung erstrecken und daß zur Erhöhung des Verschleißschutzes den Heizflächenrohren 2 Verschleißschutzelemente in Strömungsrichtung gesehen vorgeschaltet sind

Die kreisrunden Profile 20 gemäß FIG. 3 bis 7 weisen den Vorteil auf, daß sie wegen ihrer Querschnittskonfiguration in allen Qualitäten auf dem Markt erhältlich sind, insbesondere auch hinsichtlich Korrosion. Ein weiterer Vorteil ist, daß sie nach Abnutzung in einer Drehstellung in eine andere Stellung gedreht werden können, ehe sie herausgezogen werden müssen, d.h. es kann eine längere Reisezeit erreicht werden. Das in der FIG. 8 gezeigte Verschleißschutzelement 32 weist einen dreieckförmigen Querschnitt auf und wird in Betriebstellung so angeordnet, daß eine Dreieckspitze entgegen der Gasströmung ausgerichtet ist. Bei einem gleichseitigen Dreieck wird der Vorteil erreicht, daß sich an den Flächen aufgrund des Anströmwinkels eine Art Gleitverschleiß einstellt, der wesentlich geringer ist als der Verschleiß unter einem Winkel zwischen 30 und 40°.

Das Verschleißschutzelement 33 gemäß FIG. 9 weist einen quadratischen Querschnitt auf. Dieser Querschnitt weist hinsichtlich des Verschleiß folgenden Vorteil auf. Die Oberseite unterliegt dem Prallverschleiß, welcher wesentlich geringer ist als der Gleitverschleiß und die Seitenwände unterliegen einem sehr geringen Gleitverschleiß.

Die Wahl unterschiedlicher Querschnitte für die Verschleißschutzelemente führt zu einem Optimum unter Berücksichtigung des zulässigen Druckverlustes.

Sowohl bei den Flossen 12 und 13 als auch bei den Verschleißschutzelementen mit Vollprofil ist es möglich, daß sie insgesamt aus einem verschleißschutzfesten Material bestehen oder aus einem weniger verschleißschutzfesten Kern mit einer erosionsbeständigen Beschichtung.

In den FIG. 3, 4 und 6 sind mäanderförmige Heizflächen 6, 27, 28 und 29 dargestellt, deren Mäanderebene sich parallel zu den Tragrohren erstreckt. Es ist jedoch auch möglich, daß sich die Mäanderebene senkrecht zu den Tragrohren erstreckt.

Bei der Ausführungsform gem. FIG. 4 ragen die Enden der Verschleißschutzelemente 20 durch die Kanalwand hindurch, um ein Einschieben oder Herausziehen zu ermöglichen.

Wie in der FIG. 1 dargestellt, können Deflektor 10 und Verschließschutzelemente 20, 32, 33 auch gemeinsam verwendet werden; dies ist jedoch nicht unbedingt erforderlich für staubbeladene Gase.

In der FIG. 10 ist eine andere Möglichkeit aufgezeigt. Die Verschleißschutzelemente 20 durchsetzen die Wand 24 nicht. in Zuordnung zur Lage der Verschleißschutzelemente sind in der Wandung Öffnungen 34 vorgesehen, die durch einen herausnehmbaren Verschlußstopfen 35 verschlossen sind. Die Verschleißschutzelemente können nach Herausnahme des Verschlußstopfens durch ein durch die öffnung 34 greifendes Werkzeug z.B. über Gewindeeingriff erfaßt und durch die öffnung 34 herausgezogen werden. Bei Vorlage einer Gegenöffnung in der gegenüberliegenden Wand wäre es auch möglich, es durch ein stangenartiges und in die öffnung 34 eingreifendes Werkzeug durch die Gegenöffnung auszustoßen. Eine solche Anordnung könnte auch bei dem Deflektor 17 eingesetzt werden, wenn dieser nicht gekühlt wird.

## Ansprüche

1. Anordnung zum Schutz von Rohrabschnitten von in einem Gaskanal angeordneten schottenartigen Heizflächen gegen Verschleiß durch mit Feststoffteilchen beladenen Gasen, **dadurch gekennzeichnet,** daß das Verschleißschutzelement (10; 20; 32; 33) längs seiner Erstreckungsrichtung ohne vorherige Lösung einer festen Verbindung zu den zu schützenden Rohrabschnitten (8; 9) aus dem Gaskanal (1; 24) herausziehbar ist.

2. Anordnung zum Schutz von einer Gaskanalwand benachbarten Endbögen von in den Gaskanal eingebrachten mäanderförmig ausgebildeten Heizflächenrohren mit einem die Gasströmung im Bereich der Endbögen umlenkenden und sich parallel zu der Gaskanalwand erstreckenden Deflektor als Verschleißschutzelement nach Anspruch 1, **dadurch gekennzeichnet,** daß bei einer aus Rohren (2) aufgebauten Wandheizfläche (5) des Gaskanals der Deflektor (10) aus einem sich quer zur Wandheizfläche (5) erstreckenden länglichen Träger (11) mit im wesentlichen in diametraler Stellung angeordneten, vorzugsweise angeschweißten Flossen (12, 13) besteht und der Deflektor durch einen entsprechend geformten Schlitz (17) in einer Gaskanalwand (4) in den Gaskanal einführbar und dort in eine Betriebsstellung verschwenkbar ist, in der die Gasströmung (G1) von der Gaskanalwand fortgelenkt und auf weniger geschwächte Teile der Heizflächenrohre gelenkt wird.

3. Anordnung nach Anspruch 1 oder 2, **dadurch gekennzeichnet,** daß der Träger als gekühltes Rohr (11) ausgebildet ist.

4. Anordnung nach einem der Ansprüche 1 bis 3, **dadurch gekennzeichnet,** daß die Flossen (12, 13) an ihren freien Kanten mit Ausnehmungen (14;

15) versehen sind, die die zu schützenden Rohre (7) der Schottenheizfläche (6) bzw. der Wandheizfläche (5) übergreifen.

5. Anordnung zum Schutz länglicher Rohrabschnitte von in dem Gaskanal angeordneten Schottenheizflächen, bei dem das Verschleißschutzelement sich parallel zu den Rohrabschnitten erstreckt und in Strömungsrichtung des Gases gesehen vor dem Rohrabschnitt dieses überdeckend angeordnet ist, nach einem der Ansprüche 1 bis 4, **dadurch gekennzeichnet,** daß mindestens ein Verschleißschutzelement (20; 32; 33) mit Abstand von dem zu schützenden Rohrabschnitt (8) und ohne feste Verbindung zu diesem angeordnet ist.

6. Anordnung nach einem der Ansprüche 1 bis 5, **dadurch gekennzeichnet,** daß der Abstand (c) des Verschleißschutzelementes (20) von dem zu schützenden Rohrabschnitt (8) kleiner oder gleich dem Abstand (d) der Rohre (8) in der Heizfläche (6) ist.

7. Anordnung nach einem der Ansprüche 1 bis 6, **dadurch gekennzeichnet,** daß das Verschleißschutzelement (20; 32; 33) als Vollprofil ausgebildet ist.

8. Anordnung nach einem der Ansprüche 1 bis 7, **dadurch gekennzeichnet,** daß das Verschleißschutzelement einen kreisrunden (20), einen dreieckförmigen (32) oder einen quadratischen (33) Querschnitt aufweist.

_Fig. 1._

_Fig. 2._

Fig. 6.

Fig. 4.

Fig. 3.

Fig. 5.

$a \geq b$

$c \leq d$

Fig. 10.

20

*Fig. 7.*

G

32

*Fig. 8.*

G

33

*Fig. 9.*

G

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3347083 (VEREINIGTE KESSELWERKE) <br> * Seite 9, Zeilen 1 - 20; Figuren * <br> --- | 1 | F22B37/14 <br> F22B37/10 |
| A | DE-B-1085890 (LA MONT) <br> * das ganze Dokument * <br> --- | 1 | |
| A | GB-A-1125501 (DOMINION BRIDGE) <br> --- | | |
| A | US-A-4427058 (BELL) <br> ------ | | |

| | RECHERCHIERTE SACHGEBIETE (Int. Cl.5) |
|---|---|
| | F22B |

Der vorliegende Recherchenbericht wurde für alle Patentansprüche erstellt

| Recherchenort | Abschlußdatum der Recherche | Prüfer |
|---|---|---|
| DEN HAAG | 12 MAERZ 1990 | VAN GHEEL J.U.M. |